# EUROPEAN PATENT SPECIFICATION

(11) **EP 2 689 562 B1**
(45) Date of publication and mention of the grant of the patent: **03.05.2017**
(21) Application number: 11714219.0
(22) Date of filing: 24.03.2011
(51) Int. Cl.: H04L 12/26, H04L 12/729, H04L 12/721, H04L 12/741, H04L 12/703, H04L 12/851, H04L 12/891

(54) **METHOD FOR OPERATING A FLOW-BASED SWITCHING SYSTEM AND SWITCHING SYSTEM**
VERFAHREN ZUM BETREIBEN EINES FLUSSBASIERTEN SCHALTSYSTEM UND SCHALTSYSTEM
PROCÉDÉ DE FONCTIONNEMENT D'UN SYSTÈME DE COMMUTATION BASÉ SUR DES FLUX, ET SYSTÈME DE COMMUTATION

(43) Date of publication of application: 29.01.2014
(73) Proprietor: NEC Corporation, Tokyo 108-8001 (JP)
(72) Inventor: DIETZ, Thomas, 67366 Weingarten (DE); D'HEUREUSE, Nico, 69123 Heidelberg (DE); KOLBE, Hans-Joerg, 64293 Darmstadt (DE)
(74) Representative: Patent- und Rechtsanwälte Ullrich & Naumann
(86) International application number: PCT/EP2011/001480
(87) International publication number: WO 2012/126488

(56) References cited:
- EP-A1- 1 973 280
- US-A1- 2003 067 941
- US-A1- 2003 214 948

## Description

The present invention relates to a method for operating a flow-based switching system in a network, including at least one network node designed to transport incoming network packets, in particular a switch or a router, wherein said incoming network packets are matched to flows according to predefined policies, wherein a dynamic flow table - primary flow table - containing information about said flows' properties is computed inside said network node or externally and stored in a memory of said network node.

Furthermore, the present invention relates to a flow-based switching system, including at least one network node designed to transport incoming network packets, in particular a switch or a router, wherein said system comprises computation means for matching incoming network packets to flows according to predefined policies and for computing a dynamic flow table - primary flow table - containing information about said flows' properties, and a memory for storing said primary flow table.

Flow based routing/switching is a mechanism nowadays rather frequently employed in networks, which allows fine granular control of network traffic. The specific characteristic of flow-based routing/switching is that packets are not only forwarded depending on their destination, but also on other properties, such as origin, QoS requirements, cost, etc. In this context a flow is defined as a collection of packets, which share at least one, or typically a set of common properties. For instance, a flow could include e.g. packets that all have the same source IP address and the same destination IP address ("SrcIP, DstIP"). In general, the more fine-granular the traffic should be controlled, the more different flows need to be handled by the switching system.

To match incoming packets to flows, the switching system must keep information about the flows' properties in a local memory. More specifically, for all flows passing through the switching system that are subject to flow-based handling this memory stores information related to specific flow characteristics. To enable highspeed switching, often a special type of memory, denoted "TCAM" (Ternary Content-Addressable Memory), is required. As TCAM is very complex and expensive, its size on a switch is usually very limited.

The limitation of flow memory leads to problems when a large number of flows pass through a switching system. Once the memory of the switching system is full, the switching system cannot simply add new flow entries. According to existing technology there are several ways the switching system can deal with this problem:
According to a rather straightforward approach the switching system can simply reject a new flow entry in case of the memory of the switching system is completely full. As a consequence, the packets of this flow will not be processed correctly or will not be processed at all.

In a more sophisticated implementation of the switching system, the network equipment designed to transport network packets of different flows may delete some existing flow entries to free up memory, and it may then insert the new flow. The deletion of flow entries may be performed according to different policies. For instance, the switching system might delete i) flows with lower priority, ii) older flows, or iii) flows randomly. However, this will strongly impact the switching system's forwarding performance, and depending on the implementation it is rather likely that packets will be dropped. In some implementations (e.g., OpenFlow), the switching system will ask a flow-controller (e.g., OpenFlow-controller) how to process the packets. As this will happen for all incoming packets for which no flow entry exists in the switching system's memory, the controller can easily be overloaded.

According to a further alternative the switching system uses a slower (but larger) secondary memory when the primary memory is full. However, in this approach the forwarding speed of the switching system will be strongly reduced.

All of the above methods will impact the performance of the network and lead to non-optimal and often un-deterministic network states. Although the problem can be reduced by increasing the total flow memory, this memory will always be limited and the switching system will eventually run out of memory. Document US2003/0214948 A1, relates to a router for supporting differentiated qualities of service, QoS, and an Internet protocol, IP, packet classification method performed in the router. The router hierarchically divides a memory having flow tables into a fast internal cache memory and an external typical memory. The internal cache memory stores recently searched flow table entries, which are preferentially searched. When the internal cache memory searching fails, the flow tables of the external memory are searched.

Some flow based switches, e.g., the NEC OpenFlow Switch IP8800/S3640-48TW-LW have support for secondary or emergency flow tables. These secondary or emergency tables are static, i.e., they are configured at startup-time via command line interface and they are only activated when the connection to the (OpenFlow) controller is lost. Those tables therefore can ensure network operation when the control connection is lost, but do not solve the problem of full flow tables described above.

Another related prior art tool is the configuration protocol Netconf together with the corresponding configuration databases. These databases only contain static information, and they are not intended for dynamic operation of the device. Dynamic information, such as forwarding information and flow entries, are computed at run-time and cannot be pre-provisioned.

MPLS (Multiprotocol Label Switching) is a mechanism applied in telecommunication networks for directing packets from one network node to the next with the help of labels. It is able to provide a primary and a backup path in the case of redundant LSPs (Label Switched Path) or "Fast ReRoute" (FRR) where e.g. a link is protected. MPLS provides the paths and forwarding entries but does not provide a dynamic mapping of incoming traffic to such paths as OpenFlow does. Mapping is usually done either with static or dynamic routing. If a link or path is down, the classified traffic will be redirected to another (virtual) backup interface/path. Changing to a backup path or doing a fast reroute only covers error like line errors or loss of connection. It cannot cope with situations where local resources on a network node are exhausted.

It is therefore an object of the present invention to improve and further develop a method for operating a flow-based switching system in a network and a switching system of the initially described type in such a way that even in the event that local resources on a network node, which are available for deciding on the transportation of incoming network packets, are getting exhausted the performance and operational characteristics of the network node are maintained as high as possible.

In accordance with the invention, the aforementioned object is accomplished by a method comprising the features of claim 1. According to this claim such a method is characterized in that another dynamic flow table - backup flow table - is computed and maintained in parallel, wherein said backup flow table is more coarse grained than said primary flow table, and wherein said network node switches between employing said primary flow table or said backup flow table depending on the status of predefined observables.

Furthermore, the aforementioned object is accomplished by a flow-based switching system comprising the features of claim 18. According to this claim such a switching system is characterized in that it further comprises computation means for computing another dynamic flow table - backup flow table -, which is maintained in parallel, wherein said backup flow table is more coarse grained than said primary flow table, and decision means for performing a switching between an operational state in which said primary flow table is employed and an operational state in which said backup flow table is employed, depending on the status of predefined observables.

According to the present invention it has been recognized that even in the event that a network node's resources available for flow table storage are getting exhausted, high performance of the network node with respect to packet transport can be maintained by calculating and switching to a dynamic secondary flow table, which functions as backup flow table. In particular, the predefined observables may include the utilized capacity of the memory of the network nodes. A use case beyond resource exhaustion of the local network node's memory is when a certain amount of flows is installed to redirect packets to an internal or external processing unit that has restricted computing power.

The present approach tries to replace the existing flow state with a more coarse grained but less memory consuming approach. Although an operation with the backup flow table comes along with limited functionality due to the coarser grained character of the backup flow table compared to the primary flow table, the system experiences an operational performance in case of resource exhaustion, which is significantly improved with respect to prior art solutions. In particular, flow-based network systems, such as OpenFlow based ones, are made more reliable by preventing outages caused by exhaustion of resources, e.g. memory, available for flow table storage. It is noted that the overall performance depends on the calculation algorithms employed for primary and secondary flow table calculation.

The present invention calculates a dynamic backup flow table that reflects the current state of the network in a more aggregate way as described above. A static table as it is employed in some prior art approaches cannot accommodate for that. For instance, Netconf and configuration databases in contrast lack a mechanism like a trigger that could start the upload of an emergency configuration and even if such a trigger would be given the provisioned configuration data could not contain dynamic data like the backup flow table described in the present invention.

Although a flow-based switching system according to the present invention requires additional calculation resources for pre-calculation of the backup flow table, it significantly reduces usage of local resources when to many flows need to be handled on a device. The deployment of the backup flow table reduces e.g. the granularity of QoS handling or ceases load balancing but does not reduce to total throughput of the network itself.

According to a preferred embodiment it may be provided that the process of switching from the primary flow table to the backup flow table is triggered by an event of reaching a predefined threshold value indicating exhaustion of any of the predefined observables, e.g. the available memory. Alternatively or additionally, it may be provided that the process of switching from the primary flow table to the backup flow table is triggered by an event indicating an expected degradation of network and/or service performance caused by the amount of flows being redirected to a network node-internal or external processing function with restricted computing power.

According to another preferred embodiment it may be provided that the backup flow table is activated in case the memory and/or other local flow-related resource constraints prevent the network node from operating the said primary flow table. To this end certain conditions, e.g. a threshold for the percentage of memory utilization may be predefined and regularly checks may be performed whether the conditions are fulfilled. For instance, in a specific implementation an activation of the backup flow table may be executed in the event that the flow entries of the primary flow table require a storage capacity that exceeds the amount of 99% of the overall available storage capacity of the employed memory.

In a specific embodiment the backup flow table may be stored in the same memory area of the memory as the primary flow table, resulting in the advantage that only a single memory is required. In such case the flow entries of the backup flow table may be given a lower priority than the flow entries of the primary flow table. When an exhaustion of flow entry memory is experienced, the priority of the secondary flow entries ease may be increased above the priority of the primary ones in order to activate the backup flow table. Alternatively, the flow entries of the primary flow table may just be deleted.

In another embodiment the primary flow table may be stored in a first memory area of the memory, whereas the backup flow table is stored in a different second memory area of the memory. This separate second memory area may be slower and cheaper than the one employed for the primary flow entries, which are stored as usual in their (typically very fast) memory area. In such case, switching between an operation employing the primary flow table and an operation employing the backup flow table may be performed by deleting the primary flow table from the first memory area and by copying the backup flow table from the second memory area to the first memory area.

With respect to a particularly reliable operation, it may be provided that the activation and/or deactivation of the backup flow table is triggered by a controller. Alternatively, activation and/or deactivation may be controlled by a remote network node or by a neighbor network node.

In case of the deployment of an external controller, the external controller may control a network equipment's primary flow table (e.g. an OpenFlow switch which is controlled by an OpenFlow controller) and may at the same time keep a backup flow table. In such implementation activation and/or deactivation of the backup flow table can be performed in such a way that the controller deletes the primary flow entries of the network equipment and saves the backup flow entries that were computed beforehand into the network equipment. It may be provided that the controller calculates a corresponding backup flow table in parallel to calculating the primary flow table. Alternatively the controller may do this on demand, e.g. when a network equipment runs out of memory. The controller can either proactively monitor the network equipment to detect a low memory state, or can be requested by the equipment to replace a certain number or all primary flow entries.

In a more global approach it may be provided that the external controller forces all network node within a network domain to perform coordinated switching from the primary flow tables to the backup flow tables, or vice versa. For instance, the backup flow tables may be activated/deactivated network-wide in a synchronized fashion. Likewise, the calculation of backup flow tables may follow a more global approach. Instead of calculating backup flow tables per each network node individually, it may be provided that the calculation is performed per group of network nodes, or even for the network as a whole. It is noted, however, that a full network approach as described above requires the full review on the network (as in any OpenFlow based solution).

With respect to an efficient handling, a backup flow table may be pushed to a network node upon request and/or trigger events. In a preferred embodiment the backup flow table may be proactively pushed to the respective network nodes.

With respect to the creation of a backup flow table different approaches are envisioned. For instance, it may be provided that a backup flow table is designed such that one flow entry of the backup flow table substitutes and/or aggregates several flow entries of the primary flow table. As a consequence, the backup flow table it is coarser grained than the primary flow table, i.e. it provides limited functionality, however coming along with the advantage of less memory capacity.

In another embodiment it may be provided that network equipment that uses different QoS classes to prioritize some flows over others for the same destination and/or source could it give up prioritization of flows and treat all flows with the same QoS and reduce the number of flow entries in this way. As an example, there could be a flow-based rule to map different flows into different classes for VoIP traffic. An aggregated rule might map all VoIP packets into the same class.

A network equipment that does load balancing and thus creates flow entries for forwarding flows to a number of different destinations all fulfilling the same service based on their source MAC or IP address could stop doing load balancing and forward all traffic to the same destination. This would save the flow entries for the other load balancing destinations.

Usually a network operator would try to forward traffic to those peers where the monetary costs for forwarding traffic are least. This leads to a variety of flow entries for different destinations and different peers. If the network equipment runs out of flow entry memory it could reduce the number of flow entries by forwarding all the traffic to the same peer.

When traffic should be monitored, e.g., for accounting, flow entries have to be setup in order to copy the traffic to the monitoring point. For a fine granular monitoring, these entries are quite numerous. In case, the system runs out of memory, the entries can be replaced by fewer, lower granular flow entries.

There are several ways how to design and further develop the teaching of the present invention in an advantageous way. To this end, it is to be referred to the patent claims subordinate to patent claims 1 and 18 and to the following explanation of preferred examples of embodiments of the invention, illustrated by the figures. In connection with the explanation of the preferred examples of embodiments of the invention by the aid of the figures, generally preferred embodiments and further developments of the teaching will be explained. In the drawings
- Fig. 1: is a schematic illustration of a switching system according to prior art together with an exemplary flow,
- Fig. 2: is a schematic view of a first embodiment of a switching system according to the present invention illustrating the process of switching from a primary flow table to a backup flow table,
- Fig. 3: is a schematic view of a second embodiment of a switching system according to the present invention employing flow tables with prioritized flow entries,
- Fig. 4: is a schematic view of a third embodiment of a switching system according to the present invention with the backup flow table being copied from a separate memory, and
- Fig. 5: is a schematic view of a fourth embodiment of a switching system according to the present invention with the backup flow table being kept in an external controller.

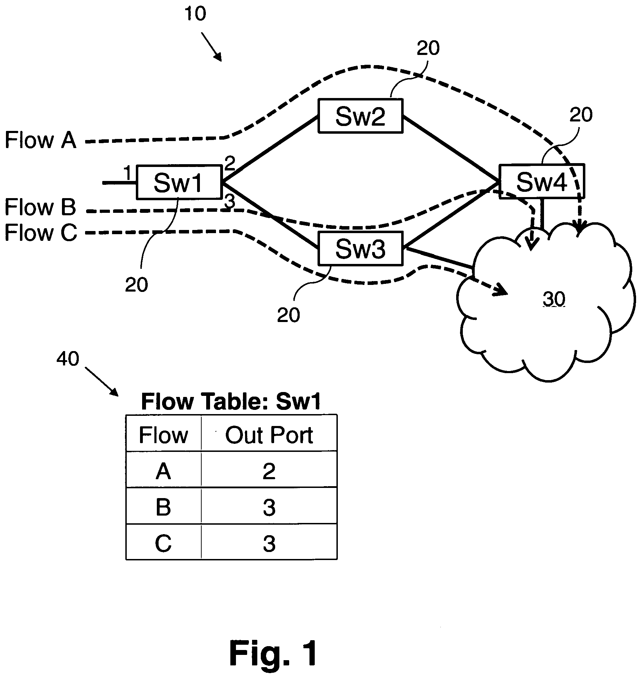

A typical switching system as known in prior art is illustrated in Fig. 1. The illustrated switching system 10 includes a plurality of switches 20, from which four switches - Sw1-Sw4 - are exemplary shown. Connections between the switches 20 as well as to a destination network 30 are indicated by solid lines. The paths along which flows are transported are indicated by dashed lines.

In Fig. 1 three flows - Flow A, B, and C - are depicted, wherein a flow is defined by a set of common properties. Then, all packets that fulfill the set of common properties belong to the respective flow. In Fig. 1 the three flows are arriving at switch Sw1 and all have to be transported to the destination network 30. Switch Sw1 has one ingress port 1, where the three flows come in, and two egress or out ports 2 and 3. The decision of whether to transport a flow via out port 2 or out port 3 is made on the basis of information contained in a flow table 40, which for switch Sw1 is also depicted in Fig. 1. The flow table 40 is calculated and stored in a memory by switch Sw1 in a dynamic fashion. In this regard it is important to note that basically the flow table 40 can also be calculated outside of switch Sw1. In the specific embodiment of Fig. 1, flow A is transported via out port 2, whereas flows B and C are transported via out port 3.

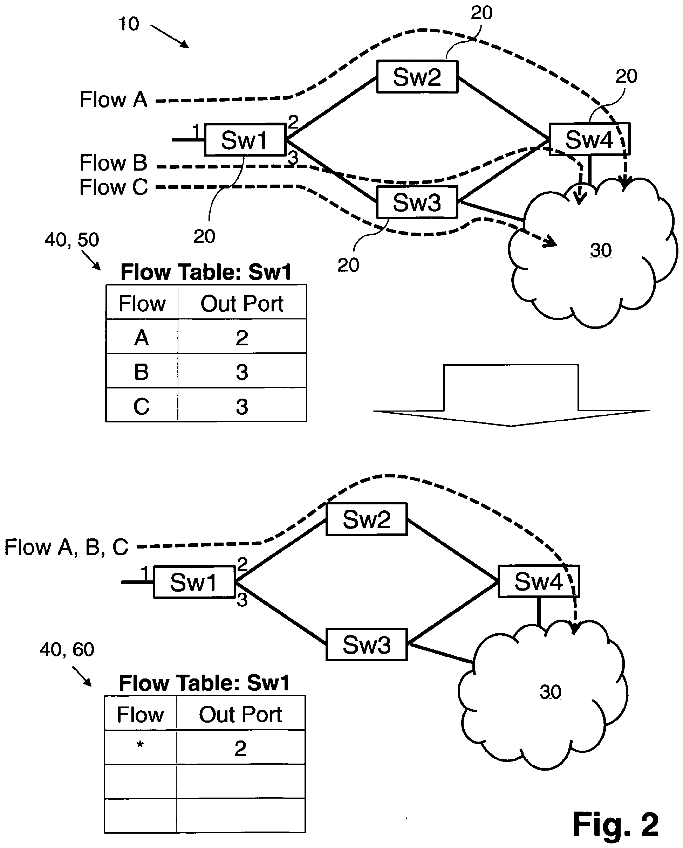

The limitation of memory available for flow tables, which basically is always given independent of the actual size of the memory, may lead to problems, in particular in the event that a large number of flows pass through the switch. Since once the memory is full, the switch cannot simply add new flow entries. In order to solve these problems with no (or almost no) impact on the performance of the network, the present invention proposes the replacement of the existing flow state with a more coarse grained but less memory consuming flow state, as will be explained in more detail with respect to the following embodiments of the invention in connection with Figs. 2-5.

The upper part of Fig. 2 corresponds with the scenario of Fig. 1 and illustrates the same switching system 10 with the same flows and the same flow table 40 for switch Sw1 as shown in Fig. 1. This existing flow table 40 is denoted as primary flow table 50 hereinafter.

As shown in the lower part of Fig. 2, the switch Sw1 computes more coarse grained flow entries than the ones contained in the primary flow table 50 and stores those flow entries in a new flow table 40 denoted secondary or backup flow table 60. For instance, one flow entry of the backup flow table 60 may substitute or aggregate several flow entries of the primary flow table. Again, it is to be noted that the computation of the backup flow table may also be performed in another network node, e.g. by a centralized controller.

In the embodiment of Fig. 2, Flows A, B and C contained in the primary flow table 50 are aggregated to a single flow (denoted '*'), which will be transported via out port 2. When the switch Sw1 starts running out of memory for flow entries, the backup flow table 60 will substitute the primary flow table 50 to keep up full speed in packet transport. The aggregation/substitution causes a less fine-grained flow-based differentiation, but allows the packet/frame forwarding still to continue.

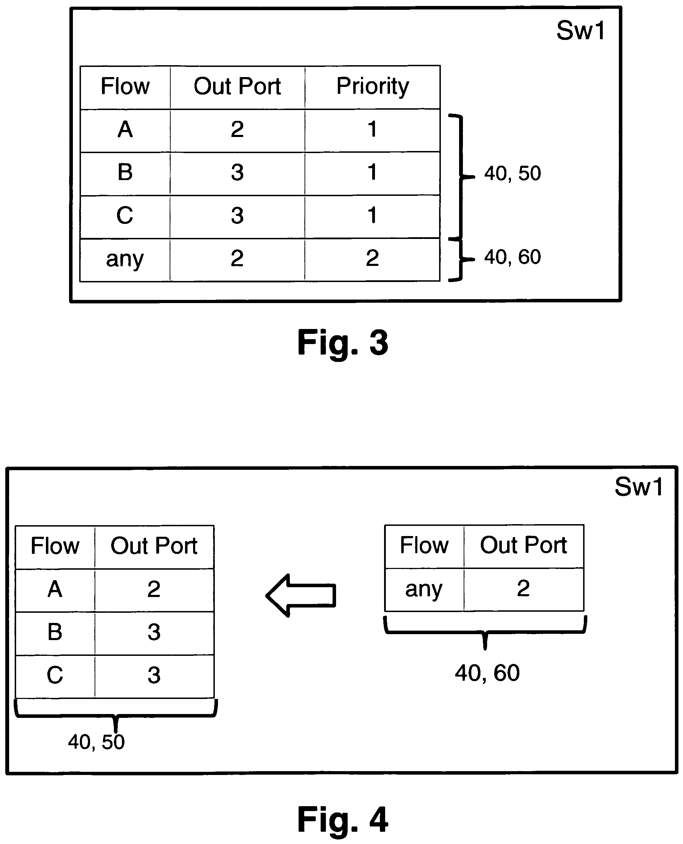

Fig. 3 again relates to the same switching system 10 and flow scenario as described in connection with Figs. 1 and 2, and it illustrates an embodiment according to the present invention in which flow tables 40 with prioritized flow entries are employed. The illustrated switch Sw1 comprises as memory a TCAM (Ternary Content-Addressable Memory) in which the flow tables 40 with prioritized flow entries are stored. The primary flow table 50 includes three flow entries for Flows A, B and C, according to which Flow A is transported via out port 2, whereas Flows B and C are transported via out port 3.

In addition to the flow entries of the primary flow table 50, switch Sw1 computes a backup flow table 60 with secondary flow entries, but gives them a lower priority than the primary flow entries. The secondary flow entries are saved in the same memory area where the primary flow entries are stored. When the network equipment runs out of flow entry memory it either raises the priority of the secondary flow entries above the priority of the primary ones and then deletes the primary flow entries or only deletes the primary flow entries. Depending on the network equipment, it might be possible to have a fast switch from primary to secondary entries in a different manner (e.g., separate tables on OpenFlow specification 1.1).

Fig. 4 again relates to the same switching system 10 and flow scenario as described in connection with Figs. 1 and 2, and it illustrates an embodiment according to the present invention with the backup flow table 60 being copied from a separate memory. The switch Sw1 computes the secondary flow entries and stores the entries in a backup flow table 60 located in a separate memory area. This memory area may be slower and cheaper than the one employed for the primary flow entries. The primary flow entries are stored as usual in their (fast) memory area, for instance a TCAM. When the switch Sw1 runs out of flow entry memory, it deletes the primary flow table 50 and performs a bulk memory copy of the secondary flow table 60 from the slow memory area to the fast flow table memory, where it substitutes the primary flow table 50.

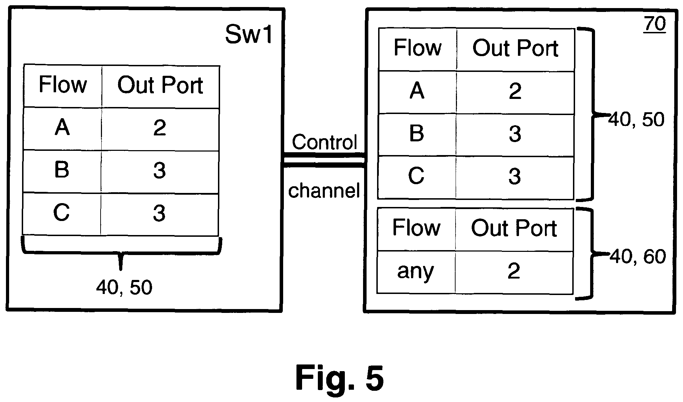

Fig. 5 again relates to the same switching system 10 and flow scenario as described in connection with Figs. 1 and 2, and it illustrates an embodiment according to the present invention with the backup flow table 60 being kept in an external controller 70. A control channel 80 is established between switch Sw1 and controller 70.

If the flow table of switch Sw1 is controlled by an external controller 70 (e.g. an OpenFlow switch which is controlled by an OpenFlow controller) then the controller can keep the backup flow table 60. When the network equipment, i.e. switch Sw1, runs out of flow entry memory, which is communicated to the controller 70 via control channel 80, the controller 70 deletes the primary flow entries of the switch Sw1 and saves the secondary flow entries that it computed beforehand into the switch Sw1.

The controller 70 can either calculate a corresponding backup flow table 60 in parallel to calculating the primary flow table 50, or can do this on demand, i.e., when network equipment runs out of memory. The controller 70 can either proactively monitor the network equipment to detect a low memory state, or can be requested by the network equipment to replace a certain number or all primary flow entries.

The controller 70 can coordinate the activation of backup flow tables 60 for all controlled devices, e.g., by performing a synchronized activation. For instance, in connection with the embodiment of Fig. 5, the controller 70 may activate backup flow tables 60 for all switches Sw1-Sw4 in a synchronized fashion.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for operating a flow-based switching system in a network, including at least one network node designed to transport incoming network packets, in particular a switch (20) or a router, wherein said incoming network packets are matched to flows according to predefined policies, wherein a flow is defined as a collection of packets that share at least one or a set of common properties, wherein a dynamic flow table (40) - primary flow table (50) - containing information about said flows' properties is computed inside said network node or externally and stored in a memory of said network node,
**characterized in that** another dynamic flow table (40) - backup flow table (60) - is computed and maintained in parallel,
wherein said backup flow table (60) is more coarse grained than said primary flow table (50), wherein a flow entry of said backup flow table (60) substitutes or aggregates several flow entries of said primary flow table (50) or wherein said backup flow table (60) reduces the granularity of QoS handling or ceases load balancing, and
wherein said network node switches between employing either said primary flow table (50) or said backup flow table (60) depending on the status of predefined observables.

2. Method according to claim 1, wherein the process of switching from said primary flow table (50) to said backup flow table (60) is triggered by an event of reaching a predefined threshold value indicating exhaustion of any of said predefined observables.

3. Method according to claim 1 or 2, wherein the process of switching from said primary flow table (50) to said backup flow table (60) is triggered by an event indicating an expected degradation of network and/or service performance caused by the amount of flows being redirected to a network node-internal or external processing function with restricted computing power.

4. Method according to any of claims 1 to 3, wherein said backup flow table (60) is activated in case said memory and/or other local flow-related resource constraints prevent said network node from operating with said primary flow table (50).

5. Method according to any of claims 1 to 4, wherein said backup flow table (60) is stored in the same memory area of said memory as the primary flow table (50), wherein flow entries of said backup flow table (60) are given a lower priority than the flow entries of said primary flow table (50),
wherein switching between an operation employing said primary flow table (50) and an operation employing said backup flow table (60) may be performed by raising the priority of the flow entries of said backup flow table (60) above the priority of the flow entries of said primary flow table (50).

6. Method according to any of claims 1 to 4, wherein said primary flow table (50) is stored in a first memory area of said memory and wherein said backup flow table (60) is stored in a different second memory area of said memory,
wherein switching between an operation employing said primary flow table (50) and an operation employing said backup flow table (60) may be performed by deleting said primary flow table (50) from said first memory area of said memory and by copying said backup flow table (60) from said second memory area to said first memory area of said memory.

7. Method according to any of claims 1 to 6, wherein the activation and/or deactivation of said backup flow table (60) is triggered by a centralized controller, by a remote network node or by a neighbor network node.

8. Method according to any of claims 1 to 7, wherein said primary flow table (50) is controlled by an external controller, which keeps said backup flow table (60),
wherein said external controller may force all network nodes within a network domain to perform coordinated switching from said primary flow tables (50) to said backup flow tables (60), or vice versa.

9. Method according to any of claims 1 to 8, wherein the calculation of said backup flow table (60) is performed per network node, per group of network nodes, or for said network as a whole, and/or
wherein said backup flow table (60) is pushed to a network node upon request and/or trigger events, wherein preferably said pushing is performed proactively.

10. Method according to any of claims 1 to 9, wherein said backup flow table (60) is designed such that one flow entry of said backup flow table (60) substitutes and/or aggregates several flow entries of said primary flow table (50).

11. Method according to any of claims 1 to 8, wherein in said backup flow table (60) different QoS classes are summarized to a single QoS class, and/or
wherein flow entries, which result from said network node performing load balancing and/or least cost route optimization, are removed from said backup flow table (60).

12. Flow-based switching system, including at least one network node designed to transport incoming network packets, in particular a switch (20) or a router, wherein said system comprises
computation means for matching incoming network packets to flows according to predefined policies, wherein a flow is defined as a collection of packets that share at least one or a set of common properties, and for computing a dynamic flow table (40) - primary flow table (50) - containing information about said flows' properties, and
a memory for storing said primary flow table (50),
**characterized in that** said system further comprises computation means for computing another dynamic flow table (40) - backup flow table (60) -, which is maintained in parallel, wherein said backup flow table (60) is more coarse grained than said primary flow table (50), wherein a flow entry of said backup flow table (60) is designed to substitute or aggregate several flow entries of said primary flow table (50) or wherein said backup flow table (60) is designed to reduce the granularity of QoS handling or to cease load balancing, and
decision means for performing a switching between either an operational state in which said primary flow table (50) is employed or an operational state in which said backup flow table (60) is employed, depending on the status of predefined observables.

13. System according to claim 12, wherein said memory includes a first memory area for storing said primary flow table (50), and a second memory area for storing said backup flow table (60).

14. System according to claim 12 or 13, wherein said network node is an OpenFlow switch, or
including a controller (70), which keeps said backup flow table (60) and which communicates with said at least one network node via a control channel (80), wherein said controller (70) is preferably an OpenFlow controller.

15. System according to any of claims 12 to 14, wherein said computation means are part of said at least one network node or embedded in said controller (70).

## Patentansprüche

1. Verfahren zum Betreiben eines flussbasierten Schaltsystems in einem Netzwerk, umfassend mindestens einen Netzwerkknoten, der ausgelegt ist, ankommende Netzwerkpakete zu transportieren, insbesondere ein Switch (20) oder ein Router, wobei die ankommenden Netzwerkpakete gemäß vorgegebenen Richtlinien zu Flüssen zusammengeführt sind, wobei ein Fluss als eine Sammlung von Paketen definiert ist, die mindestens eine oder einen Satz von gemeinsamen Eigenschaften teilen, wobei eine dynamische Flusstabelle (40) - Primär-Flusstabelle (50) -, die Informationen über Eigenschaften der Flüsse enthält, innerhalb des Netzwerkknotens oder extern berechnet und in einem Speicher des Netzwerkknotens gespeichert wird,
**dadurch gekennzeichnet, dass** eine weitere dynamische Flusstabelle (40) - Backup-Flusstabelle (60) - berechnet und parallel gepflegt wird,
wobei die Backup-Flusstabelle (60) gröber strukturiert ist als die Primär-Flusstabelle (50), wobei ein Flusseintrag der Backup-Flusstabelle (60) mehrere Flusseinträge der Primär-Flusstabelle (50) ersetzt oder aggregiert, oder wobei die Backup-Flusstabelle (60) die Granularität der QoS-Handhabung reduziert oder einen Lastausgleich beendet, und
wobei der Netzwerkknoten abhängig von dem Status vordefinierter Observablen zwischen dem Verwenden entweder der Primär-Flusstabelle (50) oder der Backup-Flusstabelle (60) umschaltet.

2. Verfahren nach Anspruch 1, wobei der Vorgang des Umschaltens von der Primär-Flusstabelle (50) zu der Backup-Flusstabelle (60) durch ein Ereignis ausgelöst wird, wonach ein vorgegebener Schwellwert erreicht wird, der eine Erschöpfung einer der vordefinierten Observablen anzeigt.

3. Verfahren nach Anspruch 1 oder 2, wobei der Prozess des Umschaltens von der Primär-Flusstabelle (50) zu der Backup-Flusstabelle (60) durch ein Ereignis ausgelöst wird, das auf eine voraussichtliche Verschlechterung der Netzwerk- und/oder Service-Leistung hindeutet, die durch die Menge von Flüssen verursacht wird, welche auf eine netzwerkknoteninterne oder -externe Bearbeitungsfunktion mit eingeschränkter Rechenleistung umgeleitet wird.

4. Verfahren nach einem der Ansprüche 1 bis 3, d wobei die Backup-Flusstabelle (60) aktiviert wird, wenn der Speicher und/oder andere lokale flussbezogene Ressourcenbeschränkungen den Netzknoten daran hindern, mit der Primär-Flusstabelle (50) zu arbeiten.

5. Verfahren nach einem der Ansprüche 1 bis 4, wobei die Backup-Flusstabelle (60) in demselben Speicherbereich des Speichers wie die Primär-Flusstabelle (50) gespeichert ist, wobei Flusseinträgen der Backup-Flusstabelle (60) eine niedrigere Priorität zugewiesen wird als den Flusseinträgen der Primär-Flusstabelle (50),
wobei das Umschalten zwischen einer Operation, die die Primär-Flusstabelle (50) verwendet, und einer Operation, die die Backup-Flusstabelle (60) verwendet, ausgeführt werden kann, indem die Priorität der Flusseinträge der Backup-Flusstabelle (60) über die Priorität der Flusseinträge der Primär-Flusstabelle (50) erhöht wird.

6. Verfahren nach einem der Ansprüche 1 bis 4, wobei die Primär-Flusstabelle (50) in einem ersten Speicherbereich des Speichers gespeichert ist und wobei die Backup-Flusstabelle (60) in einem anderen zweiten Speicherbereich des Speichers gespeichert ist,
wobei das Umschalten zwischen einer Operation, die die Primär-Flusstabelle (50) verwendet, und einer Operation, die die Backup-Flusstabelle (60) verwendet, ausgeführt werden kann, indem die Primär-Flusstabelle (50) aus dem ersten Speicherbereich des Speichers gelöscht wird und die Backup-Flusstabelle (60) von dem zweiten Speicherbereich in den ersten Speicherbereich des Speichers kopiert wird.

7. Verfahren nach einem der Ansprüche 1 bis 6, wobei die Aktivierung und/oder Deaktivierung der Backup-Flusstabelle (60) von einem zentralen Kontroller, einem Remote-Netzwerkknoten oder einem benachbarten Netzwerkknoten ausgelöst wird.

8. Verfahren nach einem der Ansprüche 1 bis 7, wobei die Primär-Flusstabelle (50) von einem externen Controller, der die Backup-Flusstabelle (60) unterhält, gesteuert wird,
wobei der externe Controller alle Netzwerkknoten innerhalb einer Netzwerkdomäne zwingen kann, ein koordiniertes Umschalten von den Primär-Flusstabellen (50) zu den Backup-Flusstabellen (60), oder umgekehrt, durchzuführen.

9. Verfahren nach einem der Ansprüche 1 bis 8, wobei die Berechnung der Backup-Flusstabelle (60) pro Netzwerkknoten, pro Gruppe von Netzwerkknoten oder für das gesamte Netzwerk erfolgt, und/oder
wobei die Backup-Flusstabelle (60) auf Anforderung und/oder aufgrund von Trigger-Ereignissen zu einem Netzwerkknoten gepusht wird, wobei das Pushen vorzugsweise proaktiv durchgeführt wird.

10. Verfahren nach einem der Ansprüche 1 bis 9, wobei die Backup-Flusstabelle (60) so ausgelegt ist, dass ein Flusseintrag der Backup-Flusstabelle (60) mehrere Flusseinträge der Primär-Flusstabelle (50) substituiert und/oder aggregiert.

11. Verfahren nach einem der Ansprüche 1 bis 8, wobei in der Backup-Flusstabelle (60) verschiedene QoS-Klassen zu einer einzigen QoS-Klasse zusammengefasst werden, und/oder
wobei aus der Backup-Flusstabelle (60) Flusseinträge entfernt werden, die daraus resultieren, dass der Netzwerkknoten Lastausgleich und/oder kostengünstigste Routenoptimierung durchführt.

12. Flussbasiertes Schaltsystem, umfassend mindestens einen Netzwerkknoten, der zum Transport von ankommenden Netzwerkpaketen ausgelegt ist, insbesondere ein Switch (20) oder ein Router, wobei das System umfasst
Berechnungsmittel, um ankommende Netzwerkpakete gemäß vorgegebenen Richtlinien zu Flüssen zusammenzuführen, wobei ein Fluss als eine Sammlung von Paketen definiert ist, die mindestens eine oder einen Satz von gemeinsamen Eigenschaften teilen, sowie zur Berechnung einer dynamischen Flusstabelle (40) - Primär-Flusstabelle (50) -, die Informationen über Eigenschaften der Flüsse enthält, und
einen Speicher zum Speichern der Primär-Flusstabelle (50),
**dadurch gekennzeichnet, dass** das system zudem umfasst
Berechnungsmittel zum Berechnen einer weiteren dynamischen Flusstabelle (40) - Backup-Flusstabelle (60) -, welche parallel gepflegt wird,
wobei die Backup-Flusstabelle (60) gröber strukturiert ist als die Primär-Flusstabelle (50), wobei ein Flusseintrag der Backup-Flusstabelle (60) ausgelegt ist, mehrere Flusseinträge der Primär-Flusstabelle (50) zu ersetzen oder zu aggregieren, oder wobei die Backup-Flusstabelle (60) ausgelegt ist, die Granularität der QoS-Handhabung zu reduzieren oder einen Lastausgleich zu beenden, und
Entscheidungsmittel zur Durchführung eines Umschaltens zwischen einem Betriebszustand, bei dem die Primär-Flusstabelle (50) verwendet wird, oder einem Betriebszustand, bei dem die Backup-Flusstabelle (60) verwendet wird, abhängig von dem Status vordefinierter Observablen.

13. System nach Anspruch 12, wobei der Speicher einen ersten Speicherbereich zum Speichern der Primär-Flusstabelle (50) und einen zweiten Speicherbereich zum Speichern der Backup-Flusstabelle (60) aufweist.

14. System nach Anspruch 12 oder 13, wobei der Netzwerkknoten ein OpenFlow Switch ist, oder
umfassend einen Controller (70), der die Backup-Flusstabelle (60) unterhält und der mit dem wenigstens einen Netzwerkknoten über einen Kontrollkanal (80) kommuniziert, wobei der Controller (70) vorzugsweise ein OpenFlow Controller ist.

15. System nach einem der Ansprüche 12 bis 14, wobei die Berechnungsmittel Teil des wenigstens einen Netzwerkknotens sind oder in den Controller (70) eingebettet sind.

## Revendications

1. Procédé de fonctionnement d'un système de commutation à flux sur un réseau, comprenant au moins un noeud de réseau conçu pour transporter des paquets de réseau entrants, et en particulier un commutateur (20) ou un routeur, dans lequel lesdits paquets de réseau entrants sont adaptés aux flux selon des politiques prédéfinies, dans lequel un flux est défini comme un ensemble de paquets qui partagent au moins un ensemble de propriétés communes, dans lequel une table de flux dynamique (40) - table de flux primaire (50) - contenant des informations sur lesdites propriétés de flux est calculée à l'intérieur dudit noeud de réseau ou en externe, et est stockée dans une mémoire dudit noeud de réseau,
**caractérisé en ce qu'**une autre table de flux dynamique (40) - une table de flux de sauvegarde (60) - est calculée et maintenue en parallèle,
dans lequel ladite table de flux de sauvegarde (60) est à grains plus grossiers que ladite table de flux primaire (50), une entrée de flux de ladite table de flux de sauvegarde (60) remplaçant ou regroupant plusieurs entrées de flux de ladite table de flux primaire (50), ou ladite table de flux de sauvegarde (60) réduisant la granularité de la gestion de qualité de service, ou mettant fin à l'équilibrage de charge, et
dans lequel ledit noeud de réseau bascule entre l'utilisation de ladite table de flux primaire (50) et de ladite table de flux de sauvegarde (60) en fonction du statut de données observables prédéfinies.

2. Procédé selon la revendication 1, dans lequel le processus de passage de ladite table de flux primaire (50) à ladite table de flux de sauvegarde (60) est déclenché par un événement qui consiste à atteindre une valeur de seuil prédéfini indiquant l'épuisement d'une quelconque desdites données observables.

3. Procédé selon la revendication 1 ou 2, dans lequel le processus de passage de ladite table de flux primaire (50) à ladite table de flux de sauvegarde (60) est déclenché par un évènement indiquant une dégradation prévue du réseau et/ou des performances du service provoquée par la quantité de flux redirigée vers une fonction de traitement interne ou externe au noeud de réseau, avec une capacité de calcul limitée.

4. Procédé selon l'une quelconque des revendications 1 à 3, dans lequel ladite table de flux de sauvegarde (60) est activée lorsque ladite mémoire et/ou d'autres contraintes de ressource locales liées au flux empêche(nt) ledit noeud de réseau de fonctionner avec ladite table de flux primaire (50.

5. Procédé selon n'importe l'une quelconque des revendications 1 à 4, dans lequel ladite table de flux de sauvegarde (60) est stockée dans la même zone de mémoire de ladite mémoire que la table de flux primaire (50), les entrées de flux de ladite table de flux de sauvegarde (60) recevant une priorité inférieure aux entrées de flux de ladite table de flux primaire (50),
dans lequel le passage d'une opération utilisant ladite table de flux primaire (50) à une opération utilisant la dite table de flux de sauvegarde (60) peut être effectué en augmentant la priorité des entrées de flux de ladite table de flux de sauvegarde (60) par rapport à celle des entrées de flux de ladite table de flux primaire (50).

6. Procédé selon l'une quelconque des revendications 1 à 4, dans lequel ladite table de flux primaire (50) est stockée dans une première zone de mémoire de ladite mémoire, et dans lequel ladite table de flux de sauvegarde (60) est stockée dans une seconde zone de mémoire différente de ladite mémoire,
dans lequel le passage d'une opération utilisant ladite table de flux primaire (50) à une opération utilisant ladite table de flux de sauvegarde (60) peut être effectué en supprimant ladite table de flux primaire (50) de ladite première zone de mémoire de ladite mémoire, et en copiant ladite table de flux de sauvegarde (60) de ladite seconde zone de mémoire vers ladite première zone de mémoire de ladite mémoire.

7. Procédé selon l'une quelconque des revendications 1 à 6, dans lequel l'activation et/ou la désactivation de ladite table de flux de sauvegarde (60) est déclenchée par un contrôleur centralisé, par un noeud de réseau distant, ou par un noeud de réseau voisin.

8. Procédé selon l'une quelconque des revendications 1 à 7, dans lequel ladite table de flux primaire (50) est contrôlée par un contrôleur externe, qui conserve ladite table de flux de sauvegarde (60),
dans lequel ledit contrôleur externe peut forcer tous les noeuds de réseau d'un domaine de réseau à effectuer un passage coordonné desdites tables de flux primaires (50) auxdites tables de flux de sauvegarde (60), ou inversement.

9. Procédé selon l'une quelconque des revendications 1 à 8, dans lequel le calcul de ladite table de flux de sauvegarde (60) est réalisé noeud de réseau par noeud de réseau, par groupe de noeuds de réseau, ou pour ledit réseau dans son ensemble, et/ou
dans lequel ladite table de flux de sauvegarde (60) est poussée vers un noeud de réseau à la demande et/ou lors d'événements déclencheurs, ladite poussée étant de préférence réalisée de manière proactive.

10. Procédé selon l'une quelconque des revendications 1 à 9, dans lequel ladite table de flux de sauvegarde (60) est conçue de sorte qu'une entrée de flux de ladite table de flux de sauvegarde (60) remplace et/ou regroupe plusieurs entrées de flux de ladite table de flux primaire (50).

11. Procédé selon l'une quelconque des revendications 1 à 8, dans lequel, dans ladite table de flux de sauvegarde (60), différentes classes de qualités de service sont résumées en un seule classe de qualité de service, et/ou
dans lequel les entrées de flux, qui résultent dudit noeud de réseau réalisant un équilibrage de charge et/ou une optimisation à moindre coût, sont supprimées de ladite table de flux de sauvegarde (60).

12. Système de commutation à flux, comprenant au moins un noeud de réseau conçu pour transporter des paquets de réseau entrants, et en particulier un commutateur (20) ou un routeur, ledit système comprenant
un moyen de calcul destiné à adapter les paquets de réseau entrants aux flux en fonction de politiques prédéfinies, un flux étant défini comme un ensemble de paquets qui partagent au moins une ou un ensemble de propriétés communes, et à calculer une table de flux dynamique (40) - table de flux primaire (50) - contenant des informations sur lesdites propriétés de flux, et
une mémoire destinée à stocker ladite table de flux primaire (50),
**caractérisé en ce que** ledit système comprend en outre
un moyen de calcul destiné à calculer une autre table de flux dynamique (40)
- une table de flux de sauvegarde (60) -, qui est maintenue en parallèle, ladite table de flux de sauvegarde (60) étant à grains plus gros que ladite table de flux primaire (50), une entrée de flux de ladite table de flux de sauvegarde (60) étant conçue pour remplacer ou regrouper plusieurs entrées de flux de ladite table de flux primaire (50), ou ladite table de flux de sauvegarde (60) étant conçue pour réduire la granularité de gestion de la qualité de service ou pour mettre fin à l'équilibrage de charge, et
un moyen de décision destiné à effectuer un passage entre un état opérationnel dans lequel ladite table de flux primaire (50) est utilisée et un état opérationnel dans lequel ladite table de flux de sauvegarde (60) est utilisée, en fonction du statut des données observables prédéfinies.

13. Système selon la revendication 12, dans lequel ladite mémoire comprend une première zone de mémoire destinée à stocker ladite table de flux primaire (50), et une seconde zone de mémoire destinée à stocker ladite table de flux de sauvegarde (60).

14. Système selon la revendication 12 ou 13, dans lequel ledit noeud de réseau est un commutateur OpenFlow, ou
comprenant un contrôleur (70), qui conserve ladite table de flux de sauvegarde (60) et qui communique avec au moins ledit noeud de réseau via un canal de contrôle (80), ledit contrôleur (70) étant de préférence un contrôleur OpenFlow.

15. Système selon l'une quelconque des revendications 12 à 14, dans lequel ledit moyen de calcul fait partie dudit noeud de réseau au moins, ou est intégré audit contrôleur (70).
